# EUROPEAN PATENT APPLICATION

(11) **EP 2 741 194 A1**
(43) Date of publication of application: **11.06.2014**
(21) Application number: 12195558.7
(22) Date of filing: 04.12.2012
(51) Int. Cl.: G06F 3/0485, G06F 3/0488

(54) **Scroll jump interface for touchscreen input/output device**

(71) Applicant: BlackBerry Limited, Waterloo, ON N2K 0A7 (CA)
(72) Inventor: Andersson Reimer, Nils Roger, 211 40 Malmö (SE)
(74) Representative: Patel, Binesh

(57) **Abstract**

Controllers 110, 120, methods, and machine-readable programming products for enabling users of touchscreens (8160) to execute jump commands to jump conveniently to the end of lists and other data sets, rather than scrolling through the entire lists or data sets, by invoking executable jump icons (9100) displayed on the touchscreen during rapid scrolling processes.

## Description

### Field of the Disclosure

This application relates to the field of user interfaces for computer systems, and more particularly to specialized user interfaces for touchscreen input/output devices for computing systems.

### Background

Touchscreen input/output devices are used in a wide variety of contexts, for a wide variety of purposes. For example, such devices are used in business, for purposes such as collecting transaction data from consumers and other purchasers; in telecommunications, for purposes such as providing multi-mode, multi-application input/output interfaces for establishing call, text, and other communications sessions; and in social media and other consumer applications, such as shopping, game playing, and banking; and for interacting with computer systems in a very wide range of additional ways.

In view of the very powerful and often highly specialized applications, and combination(s) of applications, which touchscreen devices may be used to serve, there is a continuing need for interfaces and interface devices, hard and soft, which will allow rapid and efficient navigation, review, selection, and other user interactions with displayed information.

### Description of drawings

Examples of various aspects and embodiments of the invention are shown in the drawings, and described therein and elsewhere throughout the disclosure. In the drawings, like references indicate like parts.

Figures 1 and 2 are schematic diagrams of a controller useful in implementing various aspects of the disclosure.

Figure 3 provides a schematic flowchart diagram of a process 300 for controlling input/output processes in accordance with the disclosure.

Figures 4 - 17 are schematic diagrams of graphical user interfaces in accordance with the disclosure.

### Detailed Description

In various aspects, the disclosure provides controllers, methods, and machine-readable programming products for causing a computer or other controller to execute specialized input commands in response to input by a user of a touchscreen display device.

For example, in various aspects the invention provides controllers, methods, and machine-readable programming products for enabling a user of a touchscreen to jump conveniently to the end of lists and other data sets, rather than scrolling through the entire lists or data sets, by selecting or otherwise invoking a jump icon displayed on the touchscreen during rapid scrolling processes.

For example, in one aspect the disclosure provides a controller for a computer, the controller comprising a touchscreen display comprising a screen and at least one sensor configured to generate signals representing contact by a stylus with a plurality of positions on the screen; and at least one processor configured to: associate with the signals representing contact by the stylus with each of the plurality of positions a corresponding time of contact by the stylus; using at least the plurality of positions and the corresponding times of contact, interpret contacts with a plurality of the positions as a rapid scroll command; upon interpreting the contacts with the plurality of positions as a rapid scroll command, display on the touchscreen a selectable icon associated with a jump command; and conditioned upon a selection contact by the same or another stylus proximate the jump command icon, cause the touchscreen, during a display scrolling process, to display data associated with a limit of content to be scrolled.

In some embodiments of such aspect of the invention, the selectable icon associated with a jump command is displayed proximate at least one end of a central axis of a scrolling region of the display.

In various aspects and embodiments, the disclosure further provides methods and machine-readable programming suitable for use in implementing the foregoing aspects and embodiments.

Touchscreens are dual-purpose input/output devices adapted to provide efficient, user-friendly interfaces for users of computer systems such as smartphones, personal digital assistants (PDAs) and other handheld computing devices; tablet, notebook, laptop, and other mobile computers; point-of-sale transaction devices and other business systems; and a very wide variety of special-purpose data processing systems. A touchscreen is an electronic, visual display that can simultaneously display images, text, and multi-media data in human interpretable form and accept user input through contact by the user with a specific part of the screen. By allowing the user contact a portion of the touchscreen associated with a desired input command, such as to open a file or invoke an application, and so to enter the command, a touchscreen can eliminate or reduce the need for other input devices, such as keyboards, keypads, function buttons, and pointing devices such as touchpads, scroll wheels, trackballs, and mice.

Because the user can enter a desired command by touching the touchscreen in a desired manner and in a desired location, and because the location can be associated by the display aspect of the touchscreen with a given application, command, or other logical object, a very wide variety of applications and commands can be combined, to provide very powerful and flexible input capability.

A number of technologies are currently used to provide touchscreen input/output capabilities. These include, for example, capacitative touch screens, resistive touch screens, and thin-film transistor (TFT) touchscreens. As those skilled in the relevant arts will understand, once they have been made familiar with this disclosure, any device that is capable of associating the location and duration of a contact on a display screen with one or more specified input commands will serve. In addition to the capacitative, resistive, and TFT technologies mentioned, other technologies are now in use, and doubtless others will be developed in the future.

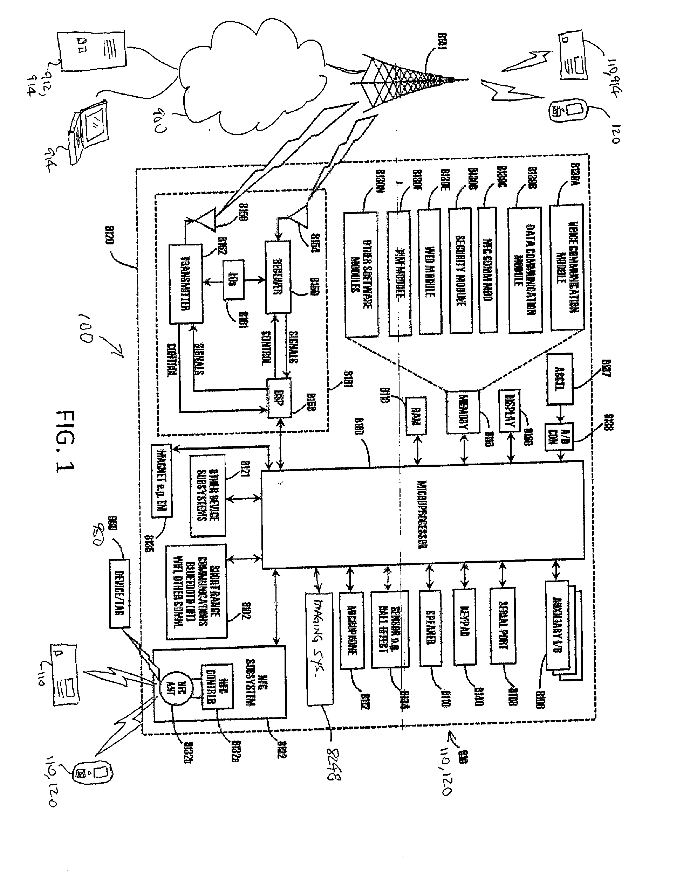

An example of a computer system 100 suitable for use in implementing various aspects of the disclosure is shown in Figure 1. In the embodiment shown in Figure 1, computer system 100 comprises one or more computers 110, one of which is shown in expanded schematic form to illustrate various functional possibilities, and any of which can be provided in the form of a wireless handheld communication device or other handheld computer 120, such as a smart phone or other PDA, or a tablet, notebook, or laptop computer; or a desktop or server-class system 912, 914. In the example shown in Figure 1, wireless handheld or mobile computer 110, 120 is configured for communication with a wide variety of external devices via a number of communications (sub)systems, as well as a wide range of other communications and computing functions, including for example e-mail and text communications; scheduling, calendar, and contacts management; game-playing; calculator; and camera and other imaging functions.

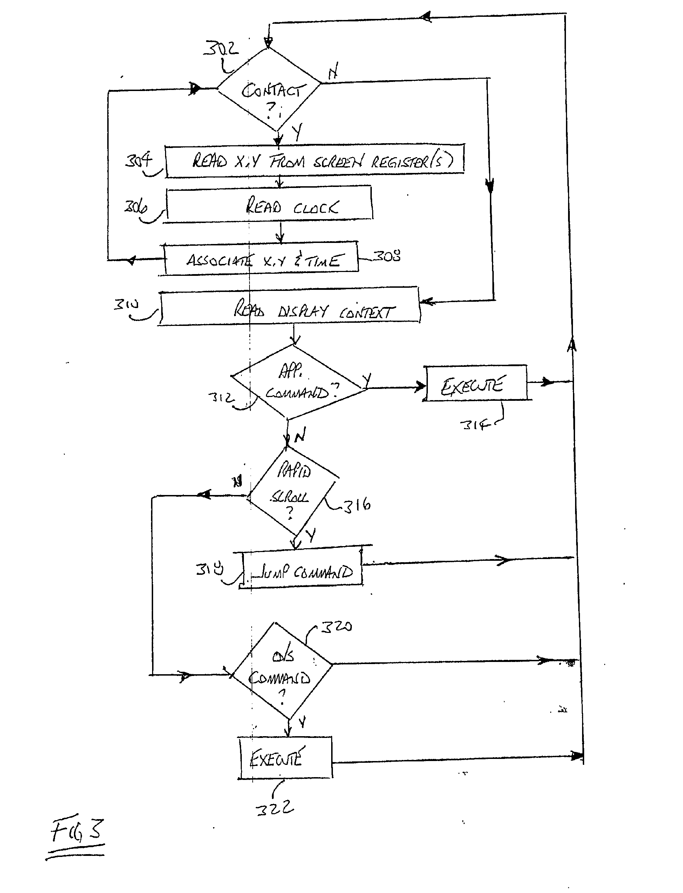

As noted above and explained further below, in the example shown in Figure 3 computer 110, 120 is capable, via one or more wireless communications (sub)systems 8101, of communicating with a wide range of devices, including for example server(s) 912 and/or other computers 914, via the internet, the public switched telephone network (PSTN) and/or other wired wide-area or local-area public or private network(s) 900, and/or one or more smartphones or other mobile computers 120, desktop computers 914, servers 912, and other computers 110 via cellular and/or other wireless telephone networks. For example, handheld or mobile computer 110, 120 may be communicatively coupled to one or more wireless local area networks (WLANs), such as a Wireless Fidelity (WiFi) network, or a wireless wide area network (WWAN) such as 3GPP or 4G Long Term Evolution (LTE) network (not shown). Wireless communications may also be established using, for example, short-range communications subsystems which may include an infrared device and associated circuits and components such as a Bluetooth communications module 8182, to provide for communication with similarly-enabled systems and devices as well as the NFC communications.

In the example shown, the handheld or mobile computer 120 is further capable, via NFC (sub)system 8132, of communicating with any one or more of passive NFC device(s) 950, such as RFID or other NFC tags; other NFC-enabled computer(s) 110, such as stationary computers, including for example vendor point-of-sale transaction devices); smartphones or other devices 120, and/or NFC-capable mobile devices 120 such as smartphones and/or laptop, palmtop, and/or tablet computers.

Using any one or more of communications (sub)systems 8101, 8102, 8132; e-mail, instant message, and other data communications module(s) 8130B; calendar, contacts, and other personal module(s) 8130F; camera, scanner and other imaging (sub)system(s) 8248, 8121 etc., handheld or mobile computer 110, 120 is capable of providing a wide range of further functions.

Figure 3 shows a non-limiting example of a range of various functional components that may be included in an exemplary handheld or other mobile computer 120. In the example shown, device 110, 120 includes, among other components, housing(s) 8120; input device(s) such as keypad(s) 8140, microphone(s) 8112, accelerometer(s) 8137, analog/digital (a/d) converter(s) 8138, touchscreen display(s) 8160, proximity sensor(s) 8134, and imaging reader(s) 8248, such as one or more digital cameras and/or barcode readers, quick response (QR) readers, or other scanners; output device(s) such as touchscreen or other display(s) 8160, speakers(s) 8110, and magnet(s) or other field/proximity generator(s) 8135; and input/output (I/O) device(s) such as uniform serial bus (USB) auxiliary input/output port(s) 8106, parallel or serial port(s) 8108, NFC (sub)system(s) 8132, including Bluetooth and/or other short-range communication (sub)system(s), and wireless/radio transceiver (sub)system(s) 8101.

As will occur to those skilled in the relevant arts, device(s) 110, 120 may include any of a wide variety of these and other components and (sub)systems, in any desired combination(s); and they may interact in any of a wide variety of ways, in addition to those described herein.

As will further be understood by those skilled in the relevant arts, handheld in the context of this disclosure means portable and operable using one or both hands; and, in the case of smart phones, cell phones, and other PDAs, can but does not necessarily mean devices that are roughly the size of an average human palm.

One or more processors 8180, 8158, 8138, 8132(a), etc., working singly or in any desirable or otherwise suitable combinations, can use inputs generated and/or otherwise provided by any one or more of the various input device(s) including touchscreen 8160 and optionally any one or more of devices or components 8140, 8112, 8137, 8138, 8134, 8106, 8108, 8132, 8101 and locally and/or remotely-accessible peripheral devices, such as scanners, servers, telephones, computers, etc., to generate, according to suitably-configured logic rules, output signals suitable for processing by any one or more of the various output device(s), including touchscreen 8160 and optionally any one or more of 8110, 8135, 8106, 8108, 8132, 8101, 8248, and locally and/or remotely-accessible peripheral devices, etc..

Any or all of processor(s) 8180, 8158, 8138, 8132(a), etc., along with any other desired components and/or (sub)systems incorporated, by a device 120 may be protectively and/or functionally contained within housing 8120(s) coupled, as for example by means of suitably-configured buses, etc., between the various memory, input, output, and auxiliary devices (such as battery(ies), solar power generators, etc) in order to perform the functions disclosed herein. Processor(s) 8180, 8158, 8138, 8132(a) may be of any suitable form(s). For example, CPU(s) 8180 may comprise one or more microprocessors chip contained on or otherwise attached to one or more circuit boards within housing(s) 8120. CPU(s) 8180 can provide general command and control functions including, for example, operation of the display 8160, as well as the overall operation of the mobile device 810, in response to received information and inputs, such as in response to actuation of keys on the keypad 8140 by the user. Processors, 8158, 8138, 8132(a), etc., may be provided to control specialized functions such as operation of NFC and other particular communications channels.

Logic rules suitable for use by processors 8180, 8158, 8138, 8132(a) in generating such outputs can be accessed from any suitable locally and/or remotely located source(s), including, for example, any one or more applications modules 8130A - N, etc., as, for example, explained herein. Such rules and modules can be provided in any form(s) suitable for achieving the purposes addressed herein, including for example software instructions stored in transient (volatile) and/or non-transient (persistent) memory, firmware, and hard-programmed hardware device(s) or component(s).

Memory(ies) 8118, 8116, etc., which can be of any form compatible with the purposes disclosed herein, including, for example, flash, EEPROM, RAM, ROM, disk, register, etc., can be accessed, controlled, and otherwise used by any one or more of processors 8180, 8158, 8138, 8132(a), etc., for reading data used in the various processes described herein, for storing output so generated, and for holding non-transient, machine-executable forms of suitably-configured application, O/S, module and/or other device instruction sets. Such stored data may, for example include operating system and other software executed by the processing device 8180.

Mobile and other computer (s) 110, 120 in accordance with the disclosure may therefore be considered, in the examples shown, multi-purpose, multi-function general and/or special-purpose computing devices capable, for example, of two-way RF communications as well as a very wide range of other functions, including e-mail, text, and other non-voice communications functions, and general purpose computing functions such as calendar, contact management, word processing, camera and other image processing. In addition, the mobile device 110, 120 may have the capability to communicate with other computer systems 110, 912, 914, etc., via the Internet or other network(s) 900. For example, a device 110, 120 may communicate with one or more servers 912, such as Internet servers, via RF subsystems 8101 and the associated components, including web module 8130e, and further via short-range communications subsystem(s) 8102, such as via web/browser module(s) 8130e. System(s) 8102 may include, for example, one or more Bluetooth communications modules for establishing Bluetooth wireless connection(s), and other communications modules, such as infrared modules or devices, WiFi circuits and modules, and associated components and circuits that may also form part of the RF circuitry.

A predetermined set of applications that control basic and optional device operations, such as data and voice communications 8130A and 8130B, may be installed on the device 110, 120 during manufacture. Application modules 8130A-N may include native and non-native modules for security 8130D, Web interaction 8130E, social interactions or applications, and the like.

Devices or components such as personal information manager (PIM) application module(s) 8130F may be or include one or more modules capable of organizing and managing data items, such as email, contacts, calendar events, voice mails, appointments, and task items. The PIM application is also capable of providing security via authorized access means, and sending and receiving data items via a wireless network. PIM data items may be seamlessly integrated, synchronized and updated via the wireless network with the device user's corresponding data items, such as may be stored in the cloud or as may be associated with a host computer system, for example.

A security module 8130D may include one or more native or non-native security applications, including anti-virus/anti-malware applications or functions, and protection of PIM information via applications or functions, during external interactions, may occur via NFC or via the Web, for example. Accordingly, security module 8130D may allow for degrees of security in interacting with other devices, such as the aforementioned tags, and/or other devices such as servers (herein defined to include any device acting as an Internet, intranet, extranet, or other public or private network node, host, server, or the like), and particularly with devices or aspects of a device that enable the occurrence of communication exchanges by the device occur over a network, such as the Internet.

In view, for example, of the very wide range of (sub)systems, components, applications, modules, and other functional devices available in modern computing devices 110, and the very large range of commands such (sub)systems, components, applications, etc., can require in order to function as desired, and in view of the very large quantities of data such devices can process, an important consideration in designing and using computer(s) 110, 120, etc., is to provide users with adequate levels of control of input, output, review, and other command functions. The very powerful and flexible possibilities provided by touchscreen(s) 8160, when they are properly configured and properly utilized, can enable significant improvements and efficiencies in, for example, both input, output, review, and other command processes, and user satisfaction and experience.

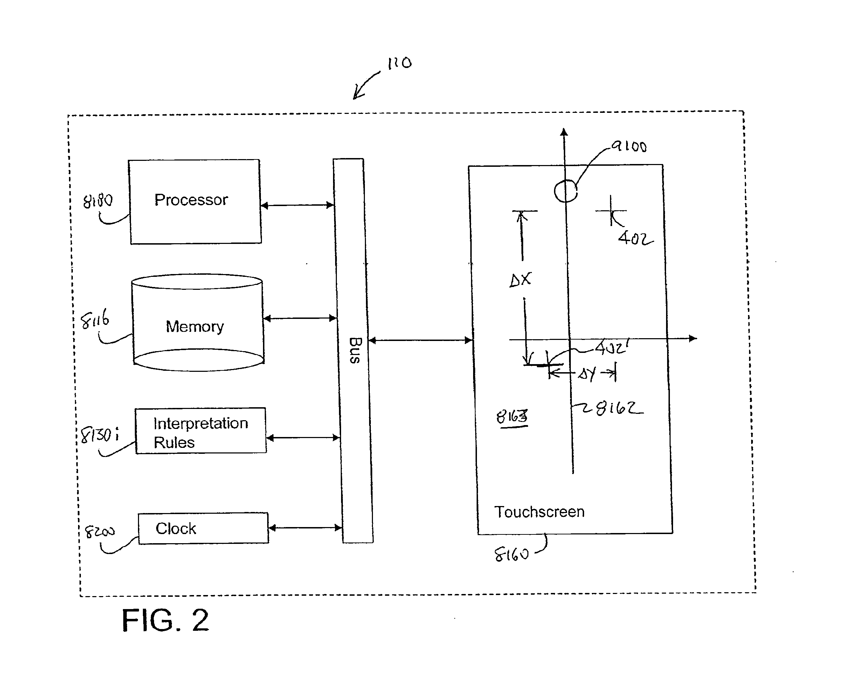

Figure 2 provides a schematic representation of an embodiment of a controller 110 suitable for use in implementing systems, methods, and devices for controlling input/output process for computers 110 in accordance with the disclosure. In the embodiment shown, the controller 110, which may be considered a computer 110, comprises touchscreen 8160, processor 8180, memory 8116, interpretation rules module(s) 8130i, and clock 8200. As described herein, touchscreen 8160 is a multi-purpose input/output device suitable for use in providing efficient, user-friendly interactive input/output interfaces for users of computer systems such as smartphones, personal digital assistants (PDAs) and other handheld computing devices; tablet, notebook, laptop, and other mobile computers; point-of-sale transaction devices and other business systems; and a very wide variety of special-purpose data processing systems.

Under the control of any suitable processor(s) 8180, etc., executing suitably-configured interpretation logic resident in soft, firm, and/or hardware form in memory(ies) or module(s) 8130i or other suitably persistent form, touchscreen 8160 provides visual output displays that can simultaneously display images, text, and multi-media data in human interpretable form, and accept user input through various types of contact by the user with one or more specific parts of the screen. User contact may be by means of a stylus, which may be, or include, any suitable pointing device(s), including any electrical, mechanical, or other device(s), which in many important examples include human digit(s), such as human finger(s) and/or thumb(s).

Touchscreen(s) 8160 may be provided in any form suitable for use in implementing the processes and objects disclosed herein. As previously noted these can, for example, include capacitative, resistive, and/or thin-film transistor (TFT) devices, and/or devices which employ any of a number of further technologies, many of which are now commercially available and others of which will doubtless be developed hereafter.

In a typical but not limiting example, a touchscreen 8160 comprises a number of touch-sensitive electromagnetic devices, or elements, disposed in a grid, or array (frequently comprising several hundred elements per linear inch, and thus thousands per square inch), such as the X-Y grid shown in Figure 2, within or beneath a liquid-crystal diode (LCD), light-emitting diode (LED) or other suitable type of display screen. Contact by a stylus such as a human finger, pen, etc., at one or more points corresponding to one or more of the electromagnetic sensors disposed in the X-Y (or other) grid causes generation of one or more electric signals which can be interpreted by the processor(s) 8160 as representing contacts at corresponding discrete points of the display grid. By associating such signals with other data, such as for example corresponding times obtained from or otherwise provided by system clock(s) 8200, and context-dependent command associations accessed from interpretation rules module(s) 8180i, processor(s) 8160 can interpret one or more contacts by a stylus as corresponding to one or more command instructions, and generate suitable command signals for use as inputs to any one or more of applications and/or operating systems module(s) 8130a, 8130b, 8130c, 8130d, 8130e, 8130f, 8130n, etc., and/or devices 8106, 8248, 8108, 8140, 8110, 8134, 8112, 8132, 8102, 8121, 8101, etc. (Figure 1). Contexts used by processor(s) 8180 in interpreting contacts with touchscreen 8160 can, for example, include any one or more of application states and/or rules, operating system states and/or rules, device states, etc., as appropriate.

Figure 3 provides a schematic flowchart diagram of a process 300 for controlling input/output processes in accordance with the disclosure. Process 300 is suitable for implementation using, for example, computers/controllers 110, 120 as described herein. As will be appreciated by those skilled in the relevant arts, process(es) described with reference to Figure 3 are exemplary only, and the invention(s) claimed below can be implemented in a variety of equivalent ways.

In the embodiment shown in Figure 3, at 302 a processor 8180 reads one or more state registers associated with a touchscreen 8160 (which can form dedicated, integral components of the touchscreen 8160, or can be stored in any suitable memory(ies) 8116) to determine whether the touchscreen has generated signals representing a contact at a point X,Y, 402 on the touchscreen (see Figure 2).

If contact signals have been generated, at 304 the signals are read, and processor 8180 generates a corresponding X,Y data record representing the location 402 on the screen 8160 at which the contact has taken place. At 306, the processor 8180 reads a signal generated by clock 8200 representing a time at which the contact 402 read at 304 took place, and at 308 associates such time with the X,Y data record generated at 304. Data record(s) associating X,Y contact locations with corresponding times can be stored in volatile and/or persistent (non-transient) memory(ies) 8116.

In the embodiment shown, process 302 - 308 repeats for as long as contact with the screen 8160 persists, regardless of how many points contact is recorded at. When at 302 it has been determined that contact with the screen 8160 has been broken, at 310 the processor 8180 can access one or more interpretation rules module(s) 8130i to execute logic to classify the nature of the contact(s) recorded at 302 - 308, and apply appropriate context-sensitive rules to generate intended user input command(s).

Interpretation rules module(s) 8130i can comprise one or more rules relating to any one or more applications and/or devices controlled by the processor(s) 8180. For example, contact-interpretation rules can be accessed from either or both of an applicable operating system (O/S) and an application such as an e-mail or other data communications application 8130B. If, for example, based on the duration and location of the content and the state of the display screen 8160, and any application(s) used in generating such display screen states, at the time(s) the contact was recorded, at 312 the contact is interpreted as an intended input command for an application such as an e-mail system 8130B, at 314 corresponding application command signals can be generated, and executed according to the rules of the applicable application module.

If at 312 it is determined that the contact recorded at 302-308 was not intended as an input command for a running application, at 316 the nature of the contact may be interpreted according to, for example, O/S logic rules to determine if it was intended as a select, hold, scroll, rapid scroll, or other command for controlling data displayed on the touchscreen 8160.

For example, if at 3160 the processor 8180, by parsing contact data collected during the cycle 302-308 and stored in the memory 8116, determines that a stylus such as a human finger initiated contact with the screen at X,Y point 402 in Figure 2, and released contact AT seconds later at X,Y point 402', and that:
ΔX, AT are both ≤ hold thresholds
   the contact may be interpreted as a tap, e.g., a 'select' or 'selection' command, with corresponding meaning and input command signal generation in accordance current screen state context in accordance with interpretation rules module(s) 8130i.

If at 3160 the processor 8180 determines that:
ΔX ≤ hold threshold, and
ΔT > hold threshold
the contact may be interpreted as a 'hold' command, with corresponding meaning and input command signal generation in accordance with interpretation rules module(s) 8130i.

If at 3160 the processor 8180 determines that:
ΔX > hold threshold,
AT > hold threshold, and
ΔX / ΔT ≤ rapid scroll threshold,
the contact may be interpreted as a 'scroll' command, with corresponding meaning and input command signal generation in accordance and command signal generation with interpretation rules module(s) 8130i.

If at 3160 the processor 8180 determines that:
ΔX > hold threshold,
AT > hold threshold, and
ΔX / AT > rapid scroll threshold,
the contact may be interpreted as a 'rapid scroll' command, with corresponding meaning and input command signal generation in accordance and command signal generation with interpretation rules module(s) 8130i.

For example, as shown in Figure 3, if at 316 it is determined that a 'rapid scroll' command has been entered, corresponding command signal generation may comprise execution of 'jump command' logic at 318, as described herein. If neither a 'rapid scroll' command nor an application command (312, 314) has been entered, then at 320 the contact may be interpreted as a 'hold,' 'tap' (selection), or 'scroll' command, and at 322 processed accordingly.

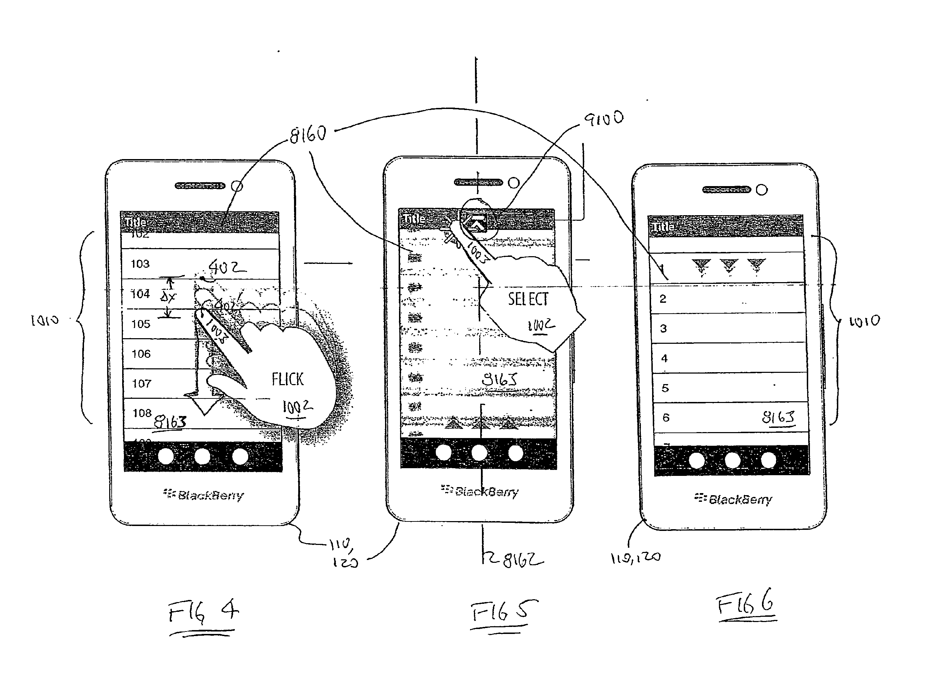

Execution at 318 of 'jump command' logic by an interpretation rules matrix 8130i may be illustrated through reference to Figures 4-17, with reference to the foregoing as appropriate.

Figure 4 is a schematic diagram of a graphical user interface generated by a processor 8180 and touchscreen 8160 as described herein, generated according to any running application module(s) 8130x, etc., and/or O/S modules, as appropriate. In the embodiment and circumstance shown in Figure 4, a user 1002 is presented by a touchscreen 8160 with data representing a list 1010, or any other scrollable data, such as text, table(s), image(s), etc. The user 1002, being presented with items 102 - 108 of the list 1010, but wishing to see the top of the list 1010, comprising list items 1 - 6, for example, swipes, or 'flicks,' his index finger / stylus 1003 rapidly from point 402 to point 402', such that touchscreen 8160 generates signals interpreted by processor 8180 as a 'rapid scroll command' as described above so that the processor 8180 initiates execution of 'jump command' logic at 318.

In executing 'jump command' logic, the processor 8180 may generate signals adapted to cause the touch screen to generate and display a selectable 'jump' command item, or icon, 9100, as shown in Figure 5. 'jump' icon 9100 may, for example, comprise an arrow image, indicating the direction of the data display 'jump,' and may be displayed as an overlay on the list/data scroll view shown on the screen 8160.

In some embodiments it can be advantageous, as for example to accommodate both left-handed and right-handed users 1002 of a computer 110 /touchscreen 8160, to cause a 'jump' icon 9100 to be displayed in a region at, or proximate to, the perimeter of the display screen 8160, in the direction in which the user 1002 wishes to scroll, and in or near the central axis 8162 of the screen. That is, it may be advantageous to display the 'jump' icon 9100 at substantially at least one end 8161 of a central axis 8162 of a scrolling region 8163 of the display, as shown for example in Figures 2 and 5.

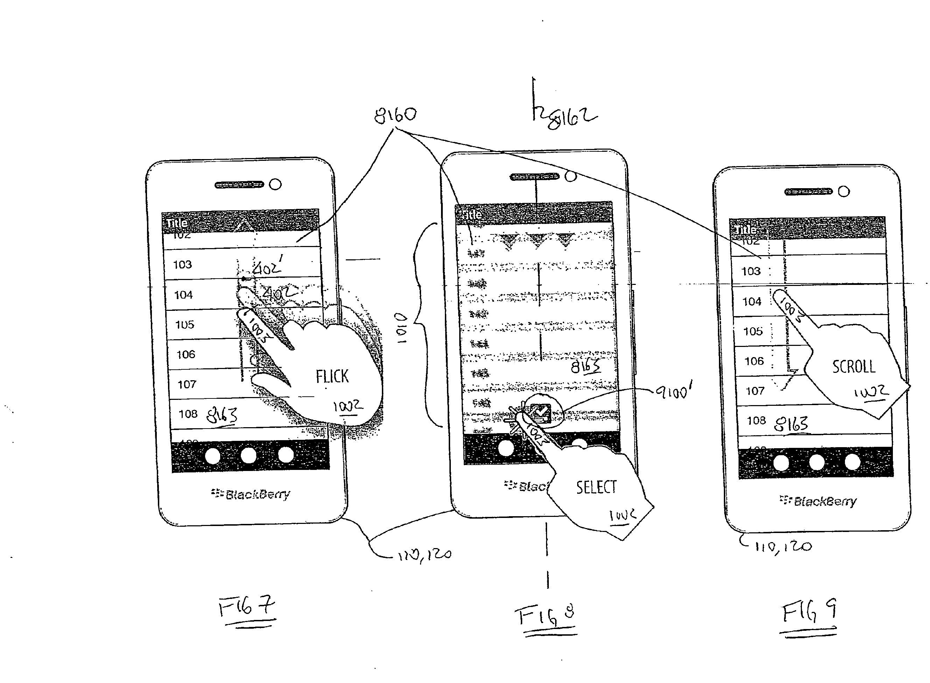

For example, if a user is scrolling a list in a 'downward' direction, as shown by entry of a 'flick' or 'rapid scroll' command from 402 to 402' in Figure 7, a 'downward jump' icon 9100' may be displayed, as shown in Figure 8.

In other embodiments, it may be advantageous to cause a plurality of 'jump' icons 9100, 9100' to be displayed, as for example in regions at or near the perimeter of the display screen 8160, in both the direction in which the user 1002 wishes to scroll, and in the opposite direction, as shown in Figure 5. It may also be advantageous, in some embodiments, to cause 'jump' icons 9100 to be displayed at other portions of the screen 8160, for example at either side, or in or nearer to the center of the screen 8160.

Selection of a 'jump' icon 9100, 9100', as for example by using a 'tap' or selection command while the system is executing a rapid scroll process, as shown in Figure 5, can cause the display to skip display of intervening portions of a list or other block or set of data that would have otherwise been displayed during subsequent portions of the 'scroll' operation, and 'jump' to a display of that portion of the data or list that would ultimately be displayed by continuing to scroll in the direction chosen by the user 1002. For example, in some embodiments, depending on the type or nature of the list or other data displayed, the size, resolution, and other characteristics of the display 8160, etc., scrolling can be 'jumped' to the last several percent of the data to be displayed. In a list, for example, the 'jump' may end, and scrolling of displayed data resume, with 20 or fewer items in a list left to display, and scrolling to the top (or bottom, edge, side, end, or other limit) of the list or data set may continue at a rate determined to cause arrival at the desired end of the list within an acceptable short period of time, i.e., 1 - 3 seconds. In alternate embodiments, as for example where scrolling of a data set is already close to the end in the desired scrolling direction, then 'jump' command execution may not cause scrolling of any data to be skipped, but may simply accelerate the scrolling process.

In order to indicate for the user 1002 that the desired end of the scrolling process has been reached, as for example the 'top' or 'bottom' of a displayed list or menu, suitable animated features may be incorporated in the scrolling process. For example, a 'bounce' or 'rubber band' animation, in which the end of the data set display is scrolled up and down slightly, for example according to a decaying rate and amplitude scheme, may be employed, with the scrolling coming to a rest at the desired position within 1 - 3 seconds, or other suitable period of time.

As will be understood by those skilled in the relevant arts, a number of techniques for 'scrolling,' 'jumping,' and 'bouncing' of data displays at the end of scrolling operations are known, and doubtless others will be developed in the future. Any techniques consistent with the objects described herein will serve.

Upon selection by a user of a 'jump' icon 9100, 9100', (hereinafter simply '9100') a display mode of the icon 9100 may be altered, so as to graphically indicate that the icon has been selected. For example, display of the icon may be altered to a less vibrant color state (i.e., grayed out), or shown with an indication of shading or other 'pressed' state suggestion.

On termination of a scrolling process at the top or other limit of a data set, display of the icon 9100 may be terminated, as for example by re-painting other portions of the screen without the icon 9100, as shown in Figure 6.

In some embodiments, 'jump' icon(s) 9100 can be displayed in appropriate location(s) on a display 8160 at any time when input by a user 1002 indicates a rapid scroll command, for example, at any time that a processor 8180 executing process such as process 302 - 308 of Figure 3 determines that, during a single stylus contact,
ΔX > hold threshold,
AT > hold threshold, and
ΔX / AT > rapid scroll threshold.

This can, for example, occur when a user 1002 initially inputs a 'scroll' command, as described above and shown in Figure 9, or a 'hold and scroll' command, and then accelerates contact of his digit / stylus 1003 across the screen 8160 such that the conditions above are satisfied.

Display of a 'jump' icon 9100 can further occur when a user 1002 rapidly shifts from scrolling rapidly ('flicking') in one direction, and then switches to another. For example, an icon 9100 displayed while a user 1002 is scrolling rapidly upward may be withdrawn, and replaced with an icon for 'jumping' downward, if the user suddenly shifts to 'flicking' or other otherwise rapidly scrolling downward.

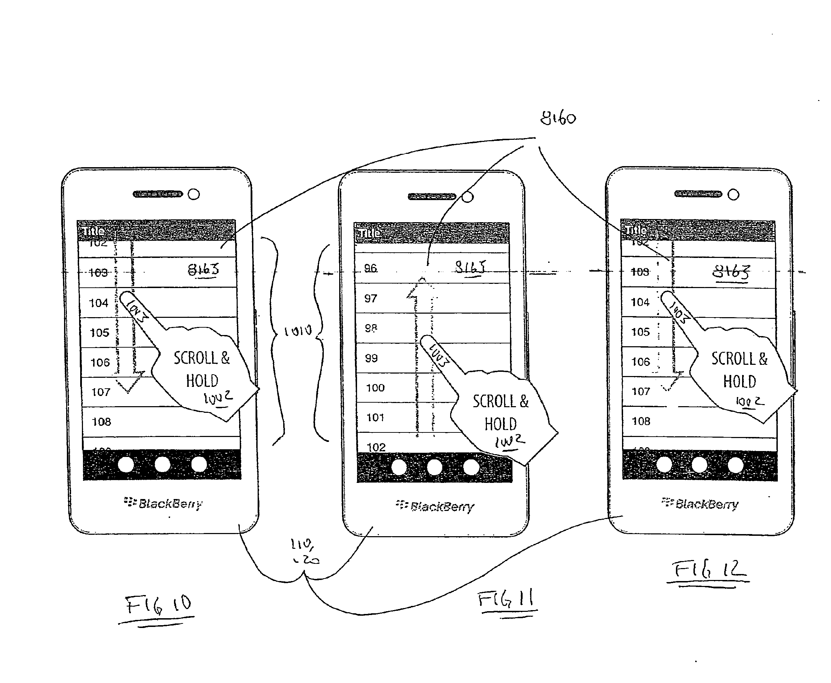

In the same or alternative embodiments, a processor 8180 / touchscreen 8160 may determine that a 'jump' icon 9100 is not to be displayed so long as a stylus 1003 maintains contact with the screen 8160, no matter what other 'flick' or 'rapid scroll' thresholds might otherwise be satisfied. For example, if a user maintains digit stylus contact while rapidly scrolling in opposite directions, as shown in Figures 10 - 12, interpretation rules logic of module 8130i may prevent display of the icon 9100.

Interpretation rules module(s) 8130i may comprise logic configured to cause a displayed 'jump' icon to cease to be displayed under desired or otherwise suitable conditions. For example, a displayed 'jump' icon 9100 may 'time out' and cease to be displayed by re-painting or other processes if:
- It has been selected, and scrolling has completed at the end or limit of the data to be displayed; or
- It has been displayed for a predetermined time (e.g., 2 - 5 seconds) without being selected, even if scrolling of the display has stopped or slowed.

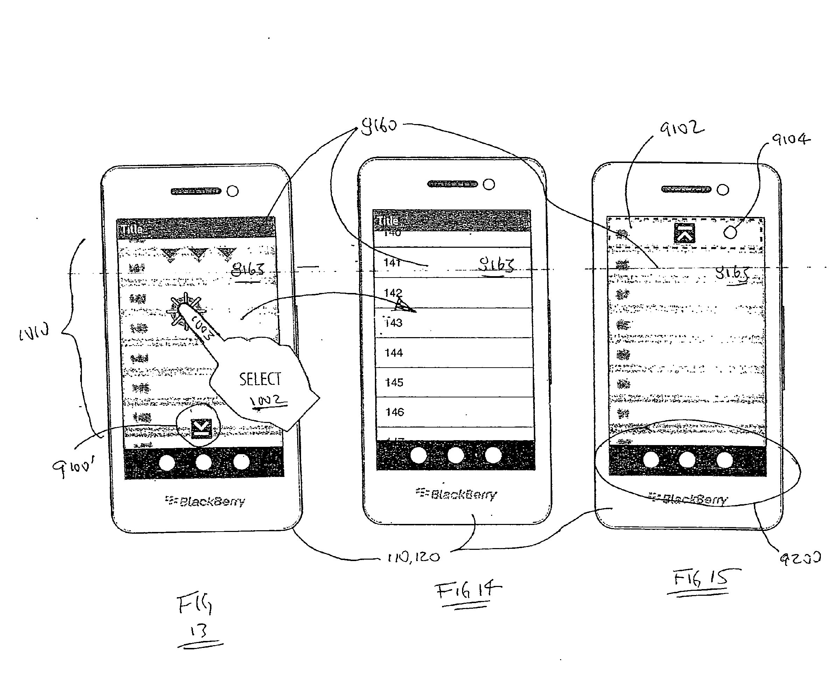

Interpretation rules module(s) 8130i may further, or alternatively, comprise logic configured to cause a displayed 'jump' icon 9100 to cease to be displayed when, during rapid scrolling, a user enters a 'tap' or select command. In addition, entry of a 'tap' or select command may cause scrolling to stop at or in other suitable relation to a position indicated at the time the 'tap' or select command was entered. Thus, for example, a rapidly scrolling user 1022 may stop the scrolling process, and view a desired selection of previously-scrolling data, when the user sees desired data, as shown for example in Figure 13.

Interpretation rules module(s) 8130i may further, or alternatively, comprise logic configured to cause a execution of 'jump' command logic only if a 'jump' icon 9100 is contacted in a manner interpreted as a 'tap' or select input. Thus, for example, if a user inadvertently 'flicks' across all or part of a 'jump' icon 9100 while wishing to rapidly scroll, or continue scrolling, the 'jump' command may be prevented from executing and requiring the user 1002 to resume searching for data in the middle of a long list, large body of text, etc.

Interpretation rules module(s) 8130i may further, or alternatively, comprise logic configured to cause a execution of 'jump' command logic if a suitable input command, such as a 'tap' or select command, is entered at a portion of display screen 8163 outside the graphic image of the icon 9100. For example, as shown in Figure 15, an active selection area 9102 can be associated by an interpretation rules module 8130i with a displayed 'jump' icon 9100, so that a 'tap' or select entry by a user 1002 within the region 9104, inside region 9102 but not on icon 9100 results in execution of 'jump' command logic.

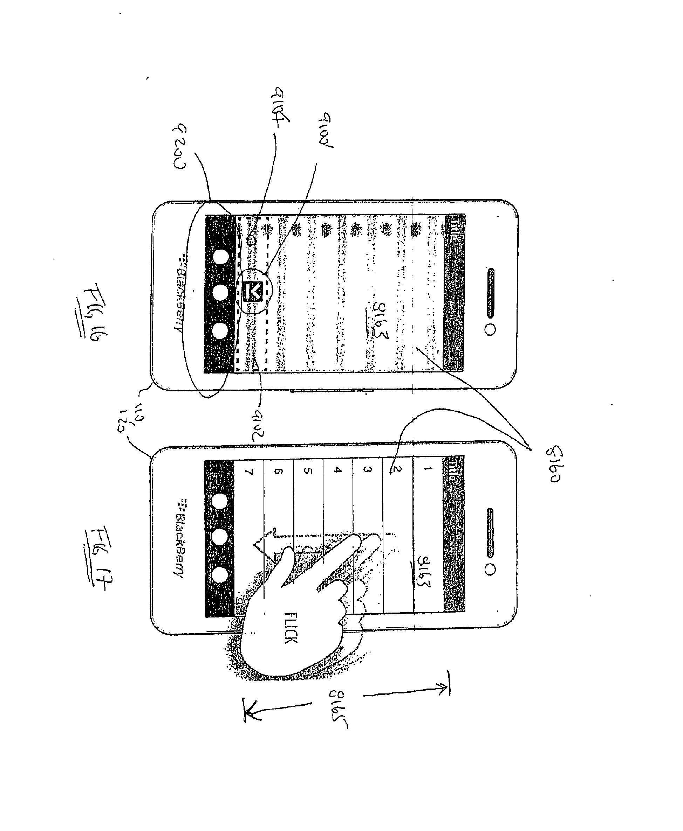

Interpretation rules module(s) 8130i may cause a 'jump' icon 9100 to be displayed at or near the periphery, or at any other desired location within, a display area 8163. For example, as shown in Figures 15 and 16, an area 9200 of a display screen 8163 may be reserved for display of specialized command inputs associated with a particular application module 8130x, or O/S commands, etc.; and display of a scrolling area, and therefore a 'jump' icon 9100' may be limited to portions of the screen 8163 outside the region 9200 reserved for command icons.

As will be appreciated by those skilled in the relevant arts, once they have been made familiar with this disclosure, a large number of further logical possibilities may be encoded within, and enforced by, interpretation rules module(s) 8130i. For example, execution of 'jump' commands such as display of icons 9100 may be disabled when drop-down menus, desktops, various types of text or media, or other data is displayed. Similarly, display of short lists, such as lists shorter than about three times the available space (e.g., screen 'height' 8165 in Figure 17) on a display 8163, may disable use of 'jump' commands and display of 'jump' icons 9100. Display of icons 9100, and/or execution of 'jump' commands may also be disabled during scrolling in a direction within a predetermined 'distance' of an end of a list or other block of data. For example, a user 1002 scrolling a block of data within about one screen height 8165 may not be presented with a jump icon 9100 in the event he/she 'flicks' the screen in the direction of the end of the data block.

Although the disclosure has been described and illustrated in exemplary forms with a certain degree of particularity, it is noted that the description and illustrations have been made by way of example only. Numerous changes in the details of construction and combination and arrangement of parts and steps may be made. Accordingly, such changes are intended to be included in the invention, the scope of which is defined by the claims.

Except to the extent explicitly stated or inherent within the processes described, including any optional steps or components thereof, no required order, sequence, or combination is intended or implied. As will be will be understood by those skilled in the relevant arts, with respect to both processes and any systems, devices, etc., described herein, a wide range of variations is possible, and even advantageous, in various circumstances, without departing from the scope of the invention, which is to be limited only by the claims.

## Claims

1. A controller for a computer, the controller comprising:
a touchscreen display comprising a screen and at least one sensor configured to generate signals representing contact by a stylus with a plurality of positions on the screen;
at least one processor configured to:
associate with the signals representing contact by the stylus with each of the plurality of positions a corresponding time of contact by the stylus;
using at least the plurality of positions and the corresponding times of contact, interpret contacts with a plurality of the positions as a rapid scroll command;
upon interpreting the contacts with the plurality of positions as a rapid scroll command, display on the touchscreen a selectable icon associated with a jump command; and
conditioned upon a selection contact by the same or another stylus proximate the jump command icon, cause the touchscreen, during a display scrolling process, to display data associated with a limit of content to be scrolled.

2. The controller of claim 1, wherein the selectable icon associated with a jump command is displayed proximate at least one end of a central axis of a scrolling region of the display.

3. The controller of claim 1, wherein a plurality of selectable icons associated with one or more jump commands is displayed, proximate at least two ends of a scrolling region of the display.

4. The controller of any preceding claim, wherein display of the selectable icon associated with a jump command is terminated following a predetermined time.

5. The controller of any preceding claim, wherein display of the selectable icon associated with a jump command is terminated upon execution of the jump command.

6. The controller of any preceding claim, wherein display of the selectable icon associated with a jump command is terminated upon detection of an input selection command in a display portion of the touchscreen.

7. The controller of any preceding claim, wherein entry of a selection command on a portion of the touchscreen outside display of the selectable icon causes execution of a jump command.

8. A method of controlling a computer display, the method comprising at least one processor:
associating, with signals generated by a touchscreen display of a computer and representing contact by a stylus with each of a plurality of positions on the touchscreen, a corresponding time of contact by the stylus;
using at least the plurality of positions and the corresponding times of contact, interpreting the plurality of contacts with a plurality of the positions as a rapid scroll command;
upon interpreting the contacts with the plurality of positions as a rapid scroll command, displaying on the touchscreen a selectable icon associated with a jump command; and
conditioned upon a selection contact by the same or another stylus proximate the jump command icon, causing the touchscreen, during a display scrolling process, to display data associated with a limit of content to be scrolled.

9. The method of claim 8, wherein the selectable icon associated with a jump command is displayed proximate at least one end of a central axis of a scrolling region of the display.

10. The method of claim 8, wherein a plurality of selectable icons associated with one or more jump commands is displayed, proximate at least two ends of a scrolling region of the display.

11. The method of any one of claims 8 to 10, comprising termination of display of the selectable icon associated with a jump command following a predetermined time.

12. The method of any one of claims 8 to 11, comprising termination of display of the selectable icon associated with a jump command upon execution of the jump command.

13. The method of any one of claims 8 to 12, comprising termination of display of the selectable icon associated with a jump command upon detection of an input selection command in a display portion of the touchscreen.

14. The method of any one of claims 8 to 13, wherein entry of a selection command on a portion of the touchscreen outside display of a graphical portion of the selectable icon causes execution of a jump command.

15. A computer readable medium comprising computer-readable instruction sets configured to cause one or more computer processors to perform the method of any one of claims 8 to 14.
